# EUROPEAN PATENT SPECIFICATION

(11) **EP 1 648 680 B1**
(45) Date of publication and mention of the grant of the patent: **25.02.2009**
(21) Application number: 04743554.0
(22) Date of filing: 26.07.2004
(51) Int. Cl.: B29C 45/00, B29C 45/16, B29C 45/26, B29C 70/62, B29C 71/00

(54) **A METHOD FOR FORMING A MOULDING COMPRISING MAGNETIC PARTICLES**
VERFAHREN ZUR HERSTELLUNG VON MAGNETISCHE PARTIKEL ENTHALTENDEN KUNSTSOFFFORMTEILEN
PROCEDE PERMETTANT DE FORMER UN MOULAGE CONTENANT DES PARTICULES MAGNETIQUES

(30) Priority: 25.07.2003 GB 0317508; 25.02.2004 GB 0404202
(43) Date of publication of application: 26.04.2006
(73) Proprietor: Applied Effects Laboratories Limited, Gloucester GL19 3AZ (GB)
(72) Inventor: HERRING, Peter, Guildford, Surrey GU8 5JY (GB)
(74) Representative: Leckey, David Herbert
(86) International application number: PCT/GB2004/003224
(87) International publication number: WO 2005/011953

(56) References cited:
- EP-A- 0 312 049
- GB-A- 2 300 589
- US-A- 5 714 102
- US-A- 5 942 324
- PATENT ABSTRACTS OF JAPAN vol. 0121, no. 67 (E-610), 19 May 1988 (1988-05-19) & JP 62 277710 A (SUMITOMO HEAVY IND LTD), 2 December 1987 (1987-12-02)
- PATENT ABSTRACTS OF JAPAN vol. 0140, no. 13 (M-918), 11 January 1990 (1990-01-11) & JP 01 259916 A (TOSHIBA CORP), 17 October 1989 (1989-10-17)
- PATENT ABSTRACTS OF JAPAN vol. 0091, no. 07 (M-378), 11 May 1985 (1985-05-11) & JP 59 230714 A (TOSHIBA KK), 25 December 1984 (1984-12-25)
- PATENT ABSTRACTS OF JAPAN vol. 0134, no. 76 (E-837), 16 October 1989 (1989-10-16) & JP 01 188000 A (FURUKAWA ELECTRIC CO LTD:THE), 27 July 1989 (1989-07-27)
- PATENT ABSTRACTS OF JAPAN vol. 0120, no. 45 (M-667), 10 February 1988 (1988-02-10) & JP 62 198423 A (HITACHI LTD), 2 September 1987 (1987-09-02)
- PATENT ABSTRACTS OF JAPAN vol. 0176, no. 23 (M-1511), 17 November 1993 (1993-11-17) -& JP 05 192964 A (KYUSHU HITACHI MAXELL LTD), 3 August 1993 (1993-08-03)

## Description

The invention relates to a method for forming a moulding, more particularly an injection moulding.

Injection moulding is a technique in which a moulding material is injected into a mould such that it coats the mould surfaces. The moulded component may then be allowed to harden prior to removal from the mould.

However, a significant disadvantage of injection moulding is that the flow of the moulding material within the mould, and hence the finished appearance of the moulding, is highly dependent upon the shape of the mould. Moulds having simple, continuous surfaces generally produce mouldings having a surface of a reasonably consistent appearance. However, moulds having irregularly shaped or discontinuous surfaces distort the flow of the moulding material within the mould and hence result in the product having a surface appearance which is non-uniform or distorted. For example, a mould formed with regions for producing a moulding having holes or protrusions therein may cause non-uniform flow lines in the moulding about these regions. This typically results in the moulding having a distorted appearance. The surface appearance of the moulding is further distorted by weld lines produced about the interface between the components of the mould.

Furthermore, because the moulding material is injected into the mould it is not possible to produce an image on the moulding surface or vary the appearance over the surface.

Dual injection moulding is a specific type of injection moulding in which a first material is injected into a mould followed by a second material. The first material coats the mould surfaces, while the second material forms a substrate for the first material. The composite moulded component may harden in the mould prior to removal from the mould.

Dual injection moulding processes may be used to provide a paint coating on a moulded plastics body. In such a process paint is injected as the first material and the base plastic as the second material. Such a process has the advantage that the moulding is co-formed with a paint coating and thus does not need subsequent painting.

An example of a dual injection moulding process which produces a pre-painted moulding is disclosed in GB 2280401. This document discloses a method of forming a painted moulding wherein a powdered or granulated plastics paint material is heated and injected into a mould, followed by the injection of a substrate plastic. The use of powdered or granulated plastics enables a more controllable flow to be obtained in the mould resulting in a paint coating thickness which is more uniform.

However, as with the injection moulding techniques discussed above, wherein a single material is injected into the mould, the surface appearance of a product produced by dual injection moulding is also affected by weld lines and is highly dependent upon the profile of the inner surface of the mould. Moulds having irregular or discontinuous inner surfaces cause the flow of the first coating (i.e. paint coating) across the surface of the mould to be distorted. This results in the first outer coating of the moulding having a distorted appearance.

This is particularly visible when the moulding requires a metallic paint finish, because the reflective, metallic flakes used in the first coating material align with the flow lines of the coating material. Furthermore, because the paint layer is injected into the mould it is not possible to produce an image on the moulding surface or control the surface appearance of the moulding. JP 62277710 discloses a method of making a plastic magnet. JP 01259916 discloses a method of making a coloured moulding.

Accordingly, it is an object of the present invention to provide an improved method for forming a moulding by an injection moulding process, wherein the moulding has an appearance which is not distorted by weld lines or by the flow lines of the coating material.

A further object of the present invention is to provide a method for forming a moulding by injection moulding wherein the moulding has a predetermined image, pattern or texture thereon.

From a first aspect there is provided a method of forming a moulding as claimed in claim1.

In a preferred embodiment, the first material comprises a coating material which coats the moulding and the second material comprises a substrate material. Preferably, the coating material comprises the magnetic particles.

In another preferred embodiment, at least a third material is injected into the mould after the second material is injected. In this embodiment, preferably the first material forms a coating layer, the second material comprises magnetic particles and the third material forms a substrate layer.

It is further contemplated that fourth, fifth, sixth, seventh or a higher number of materials may also be injected into the mould, each of which may or may not comprise magnetic particles.

The term magnetic particles as used herein encompasses any particles which are able to be manipulated by a magnetic field so that their orientation and/or distribution is altered. The magnetic particles themselves preferably do not generate magnetic fields.

Thus in accordance with the invention, at least one material is used which contains magnetic particles, and a magnetic field is applied to the material(s) in the mould so as to cause a desired orientation and/or distribution of the magnetic particles in the material(s) to give a desired visual effect. By choice of appropriate magnetic fields it is possible to compensate for the irregular surface appearance which may be caused by weld lines or non-uniform flow lines within the moulding. Furthermore, the magnetic field(s) may also be such as to form a desired image, pattern or texture in the material(s) comprising magnetic particles.

More particularly, the concentration and/or orientation of the magnetic particles within a given region of the moulding will determine the appearance of the moulding surface. These properties may be manipulated and controlled by the magnetic field(s) so as to produce any desired surface appearance. The magnetic particles align along the magnetic field(s) which are applied to the coating. Thus, in a preferred embodiment, for example, the level of light reflection and/or absorption by the magnetic particles in a particular region may be altered by changing the orientation and/or concentration of the particles in that region. For example, the magnetic fields may be arranged to move the magnetic particles into or from a particular region of the moulding or may change the orientation of the magnetic particles such that light is incident on a larger area of the particles to increase the reflectivity or absorption of that region of the moulding.

In moulds having irregular or discontinuous surfaces such as holes, protrusions or the interfaces between the multiple mould components the present invention can be employed to compensate for the distorted appearance created at these regions. The magnetic fields may be arranged such that the magnetic particles are drawn to give a substantially uniform coating and/or be orientated in the required direction. Any desired image may also be formed on the moulding surface, or substrate surface in multiple injection moulding, by arranging the magnetic fields to draw or push relatively reflective or absorptive magnetic particles to or from regions of the moulding. In this manner two-dimensional, three-dimensional and/or textured appearances may be created in regions of the moulding during the moulding process.

In the preferred embodiment the mould surface may be heated electrically, or by any other means, in order to prevent the moulding surface from curing or "skinning" before the magnetic particles have been manipulated as desired.

The magnetic particles which are included in the moulding or coating and/or substrate material may consist of a magnetic core which may be spherical, elongated or any other shape. Preferably, the magnetic core is elongated and coated with an outer layer consisting of a material which reflects or absorbs light relatively well.

In a preferred embodiment the magnetic particles are nickel. In some embodiments the particles may comprise a nickel core which may be coated in, for example, aluminium or alternatively coated with, for example, magnesium fluoride and aluminium or another metal. The magnetic particles may also have coloured coatings.

In a preferred embodiment the magnetic particles comprise leafing grade nickel flakes such as those manufactured by Novamet Speciality Products Corporation. Such flakes may be used in a coated or uncoated state. More preferably, extra fine pigment grade nickel flakes are used in the moulding or coating and/or substrate materials. The magnetic particles can be added to the moulding or coating and/or substrate materials as a dry powder or pigment slurry.

In certain embodiments, for example when a single moulding material is injected into the mould, the magnetic particles may make up 2-15% of the weight of the material(s) comprising magnetic particles. More preferably, the magnetic particles comprise 3-10% of the material(s) by weight. Even more preferably, the magnetic particles make up 5% of the material(s) by weight.

In a preferred embodiment the method is used to produce a relatively thin moulding such as, for example, a credit card. In this embodiment the moulding may be substantially translucent or transparent and preferably the magnetic particles make up between 0.1% and 0.5% of the weight of the moulding. In other embodiments in which the moulding is relatively thick the magnetic particles preferably make up about 4% of the weight of the moulding.

In other embodiments, for example when more than one material is injected into the mould, the magnetic particles may make up 0.1-15% of the weight of the material(s) comprising magnetic particles. More preferably, the magnetic particles comprise 0.5-10% of the material(s) by weight. More preferably, the magnetic particles comprise 0.1-3% of the material(s) by weight. Even more preferably, the magnetic particles make up 2% of the material(s) by weight. However, it is also contemplated that the magnetic particles can be added to the material(s) in any desired proportion and the magnetic particles may make up more than 15% or less than 0.1% of the weight of the material(s). In a preferred embodiment, the substrate and coating materials of the moulding comprise different weight percentages of magnetic particles.

Where the particles are being added to a moulding material, rather than a coating, it is preferred that the moulding material is transparent. Pigment may be added to the material for decorative effect.

The magnetic fields which manipulate the magnetic particles may be generated by one or more permanent magnet and/or electromagnets provided in or adjacent the mould.

The poles of the magnets may be arranged such that the magnetic fields are substantially parallel, perpendicular or oblique to the surface of the region of the mould comprising the magnetic particles which are to be manipulated.

These magnets may be recessed into or formed integrally with the inner or outer surfaces of the mould, or disposed between the inner and outer surfaces. Alternatively, the magnets may be arranged adjacent to the surfaces of the mould.

In some embodiments an electromagnet is used, particularly when it is desired that the magnetic field is applied only selectively during the moulding process.

Any number of magnets having any shape or size may be used in the apparatus depending upon the desired pattern or effect to be achieved. The strength of the magnetic field and the duration that it is applied may also be varied depending upon the effect to be achieved, the distance and material between the magnet and material comprising magnetic particles and the level of curing of the material comprising magnetic particles.

In order to vary the strength or position of the magnetic fields the magnetic field generating means may be movable relative to the mould. In such an embodiment magnets may be positioned, for example, within bores in the mould casing and may move perpendicularly or parallel to the coating. Alternatively, if electromagnets are employed, the power delivered to them may be varied.,

In the preferred embodiment, the mould is made from metal, preferably steel. Magnets may be provided in regions of the mould by drilling a bore part way or completely through the mould. The bore may then be plugged with a non-magnetic material. Once the bore has been plugged with the non-magnetic material it may then be drilled itself to provide a bore for inserting a magnetic material. After the magnetic material has been inserted into the bore the edges of the mould, non-magnetic and magnetic materials are preferably peened over and the whole region polished smooth.

In a preferred embodiment, the bore drilled into the mould is cylindrical and may have a diameter of approximately 5 mm. This bore may then be filled with non-magnetic copper which is then preferably bored into to provide a cylindrical bore of diameter 2 mm for receiving the magnetic material. Preferably, the magnetic material is a sintered ferrite magnet. In the preferred embodiment, the non-magnetic material is provided between the magnetic material and the mould inner surface in order to substantially prevent the inner surface of the mould from becoming magnetised as this may adversely affect the orientation and/or distribution of the magnetic particles in the moulding. In a less preferred embodiment the mould itself may be manufactured from a non-magnetic material, such as non-magnetic steel, which may be bored into in order to insert the magnetic material directly.

In the preferred embodiment liquid, powdered or granulated material may be used as the moulding, coating and/or substrate material which includes the magnetic particles.

Where the magnetic particles are being added to a moulding material (rather than to a coating), it is preferred that the moulding material is transparent or translucent. Tints may be added to the plastics material to give a desired colour.

The moulding, coating and/or substrate material is preferably heated to a plastic condition and injected into the mould. It is particularly preferred to use a powdered or granulated plastics material of a thermosetting kind which has a thermoplastic phase, with the magnetic pigment mixed therewith. In such a case the powdered or granulated plastics material can be heated sufficiently to bring it to a plastic condition (typically a putty-like conditions) in its thermoplastic phase to enable it to be injected at high pressure into the mould (e.g. in excess of 1000 bar). For example, heating a powdered or granulated plastics material to a temperature in the range 80 °C to 260 °C will normally bring it to a plastic condition for injection into the mould. With such a material, the heat absorbed to bring it to the plastic phase may ideally be utilised to cause the material to begin thermosetting, e.g. as it coats the mould or, in multiple injection moulding, following the introduction of the substrate material. In that way reasonably rapid curing of the mould can be achieved. However, if desired, the coating can be cured or curing can be completed after removal of the moulding from the mould, i.e. post-cured.

Post curing enables the curing temperature and curing time to be particularly carefully controlled. This is particularly advantageous in multiple injection moulding with regard to creating a strong bond between the coating and substrate materials.

In dual or multiple injection moulding the coating and substrate materials are preferably selected so as to have an affinity for one another. Cross-linking between the moulded coating and substrate materials may be effected during moulding or curing of the material.

The method provided in accordance with the present invention is particularly suited to the production of credit cards, casings for electronic equipment such as mobile phones and various body components of a motor vehicle.

Various embodiments of the present invention will now be described, by way of example only, and with reference to the following drawings in which:
Fig. 1 is a diagrammatic cross-section through an injection moulding machine showing the injection into a mould of a moulding material comprising magnetic particles;
Fig. 2 is a diagrammatic cross-section through an injection moulding machine showing the form of the moulding after injection of the moulding material;
Fig. 3 is a diagrammatic view of the moulding removed from the mould and placed in an oven for post curing the coating;
Fig. 4 is a partial view of a cross-section through an injection moulding machine showing the alignment of the magnetic particles in the moulding material;
Fig. 5 is a diagrammatic cross-section through a dual injection moulding machine showing the injection into a mould of coating material comprising magnetic particles;
Fig. 6 is a diagrammatic cross-section through a dual injection moulding machine showing the injection into a mould of substrate material;
Fig. 7 is a diagrammatic cross-section through a dual injection moulding machine showing the form of the moulding after injection of the substrate material;
Fig. 8 is a diagrammatic cross-section through a dual injection moulding machine showing another injection of the coating material to coat the substrate at the region of the injection port;
Fig. 9 is a diagrammatic view of the moulding removed from the mould and placed in an oven for post curing the coating;
Fig. 10 is a cross-section to a larger scale through part of a component made by a method in accordance with the preferred embodiment;
Fig. 11 is a partial view of a cross-section through a dual injection moulding machine showing the alignment of the magnetic particles in the coating material; and
Fig. 12 is a partial view of a cross-section through a multiple injection moulding machine into which three materials have been injected.

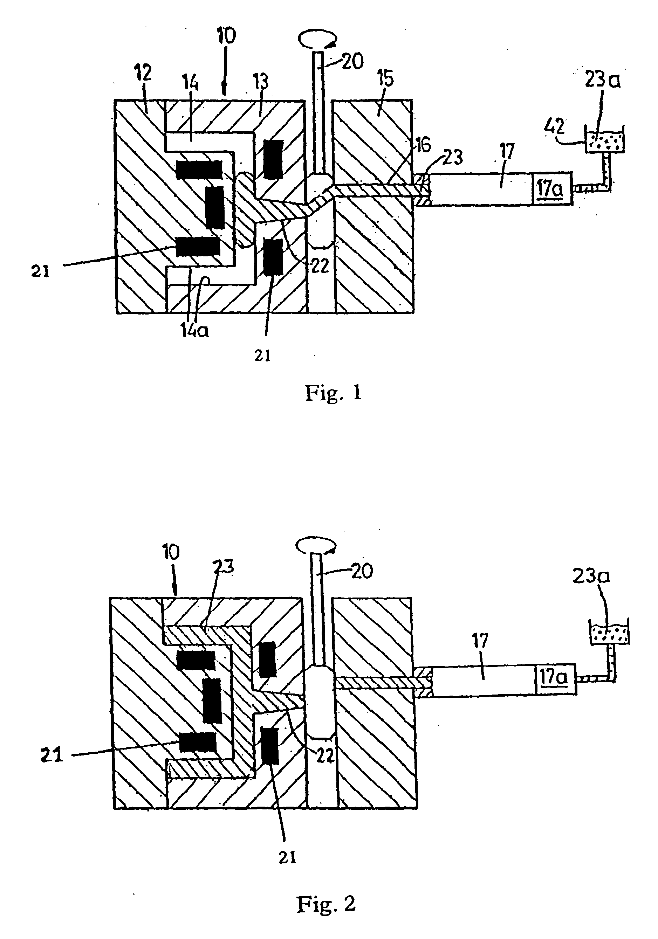

A method of forming a moulding which is not in accordance with the present invention will now be described in relation to Figs. 1-4 for illustrative purposes only.

With reference to Fig. 1, an injection moulding machine has a mould 10 having first 12 and second 13 halves defining a hollow cavity 14 therebetween. The hollow cavity 14 communicates with a block 15 which defines a passageway 16 for material from extruder 17. A rotary valve 20 may be positioned between the block 15 and an inlet port 22 in mould half 13 to selectively allow moulding material 23 to be injected into the cavity 14. A number of permanent magnets 21 may be arranged within the mould halves 12,13 in any desired position.

The extruder 17 may be associated with a heater 17a and is operated to deliver the moulding material 23 comprising magnetic particles. The moulding material 23 may consist of liquid paint although is preferably formed by heating thermosetting granulated plastics paint material 23a, including the magnetic particles, into a thermoplastic phase in which it takes on a putty-like plastic condition. A suitable granulated plastics material has been found to be one which will have a plastic condition at a temperature of around 170 °C with a putty-like viscosity. Preferably, the moulding material 23 comprises a substantially transparent or translucent plastic such as polycarbonate provided in the form of granules. The plastic may be mixed with magnetic particles comprising nickel flake pigment at a ratio of 3% by weight before being heated and injected into the mould 10 at a temperature of approximately 280 °C. In a preferred method the plastic material may be tinted with any colour, for example, by use of plastic tints. In this method the cycle time between shots may be approximately 20 seconds.

The magnets 21 produce a magnetic field within the mould 10. The magnets 21 are arranged such that the fields manipulate the magnetic particles in the moulding material 23 before it has cured. The magnetic fields may be arranged to distribute and/or re-orientate the magnetic particles such that the moulding has a uniform appearance, or alternatively, to produce a moulding of which at least a portion is created having a 2-D, 3-D or textured image or appearance.

The moulding material 23 is preferably injected into the cavity 14 whilst the mould 10 is at an elevated temperature. The temperature of the mould may be in a range of, for example, 20 °C to 150 °C, preferably around 100 °C. The valve 20 may then rotated to shut off the feed of moulding material 23.

The heat applied to the thermosetting moulding material 23 while it is temporarily in the extruder 17 is absorbed by the material 23 and, once in the mould 10, the heat will begin the curing process of the material 23. That process may begin as the material 23 is being spread over the mould 10 surfaces or may begin after the injection steps are complete. However, the magnetic fields are applied to manipulate the magnetic particles in the moulding material 23 before the curing process is completed. Preferably, the inner surface of the mould 10 is maintained at an elevated temperature of, for example, 100 °C in order to prevent the outer surface of the moulding from completely curing or "skinning" before the magnetic particles have been manipulated as required.

Fig. 2 shows a cross section through the injection moulding machine showing the form of the moulding after injection of the moulding material 23.

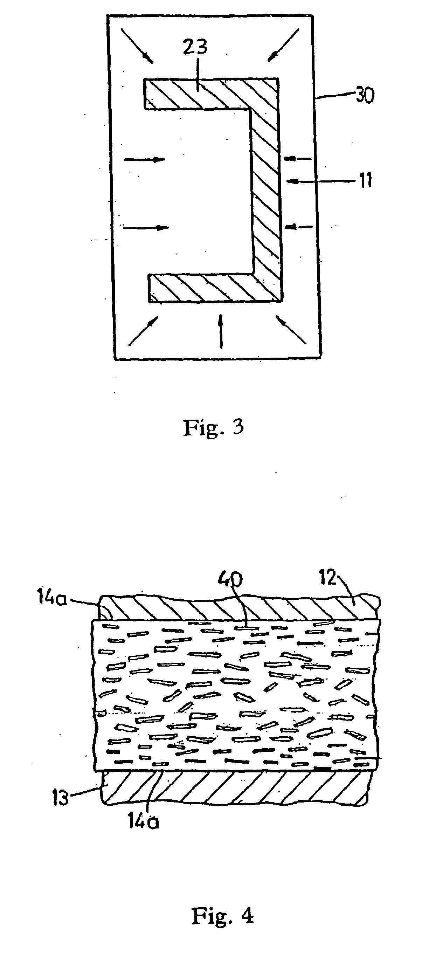

Referring to Fig. 3, the moulding 11 can be removed from the mould 10 and placed in an oven 30 to further heat and cure the moulding material 23, The oven is pre-heated to a temperature of, for example, around 250 °C. The moulding 11 may be subjected to heat at that temperature as indicated by arrows for a period which is sufficient to cure the moulding material 23 but which is insufficient to have a significant softening effect on the structure of the moulding 11. Further magnetic fields may be applied to the moulding 11 at this stage if desired.

Fig. 4 shows a portion of a cross-section through the injection moulding machine. In this method elongated magnetic flakes 40 have been added to the moulding material 23. It has been found that as the moulding material 23 spreads over the surfaces 14a of mould cavity 14, the spreading or flowing action causes the magnetic flakes 40 to orientate themselves so that they lie generally in a plane parallel with the flow. It can be seen that in this method the magnetic fields have been arranged to orientate the magnetic flakes 40 in substantially the same direction and concentration throughout the outer portion of the moulding such that a moulding having a uniform appearance will be produced, regardless of the direction of the flow lines- In addition the magnetic fields may orientate the magnetic flakes 40 to lie so as not to project from the surface of the finished moulding.

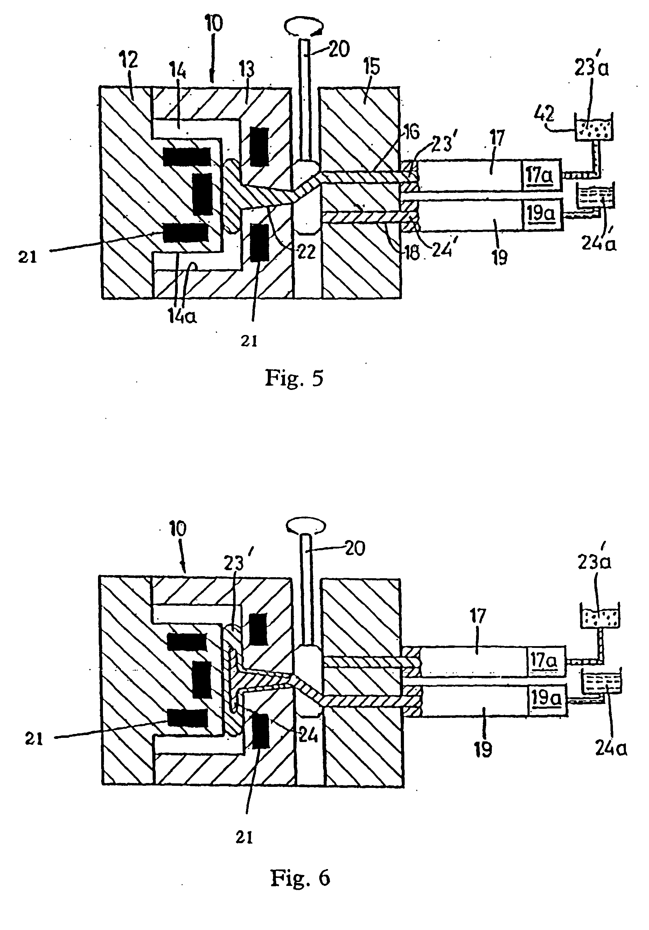

Fig. 5 depicts a schematic of a dual injection moulding machine according to a preferred embodiment of the present invention. The moulding machine has a mould 10 having first 12 and second 13 halves defining a hollow cavity 14 therebetween. The hollow cavity 14 communicates with a block 15 which defines a passageway 16 for material from a first extruder 17 and a second passageway 18 for material from a second extruder 19. A rotary valve 20 is positioned between the block 15 and an inlet port 22 in mould half 13 for selection of the material to be injected into the cavity 14. A number of permanent magnets 21 may be arranged within the mould halves 12,13 in a desired position.

The first extruder 17 is associated with a heater 17a and is operated to deliver a coating material 23' which may comprise magnetic particles. The coating material may consist of liquid paint or may be formed by heating thermosetting granulated plastics paint material 23a' including magnetic particles into a thermoplastic phase in which it takes on a putty-like plastic condition. A suitable granulated plastics paint material has been found to be one which will have a plastic condition at a temperature of around 170 °C with a putty-like viscosity.

An initial quantity of the coating material 23' is injected into the cavity 14, the mould 10 being at a temperature in a range of, for example, 20 °C to 100 °C. The valve 20 is then rotated to shut off feed of coating material 23'.

Fig. 6 shows the step in which the substrate material 24 is injected. A thermoplastics substrate material 24, such as ABS or nylon 24a, is heated in a heater 19a associated with the second extruder 19 and is injected into the cavity 14 behind the injected coating material 23'. Injection of the substrate material 24 causes the coating material 23' to spread over the mould surfaces 14a defining cavity 14 and injection is continued until the inner surfaces of the mould 10 are coated with the coating material 23', which also envelopes the substrate material 24. In addition to the coating material 23' or, less preferably, alternatively the substrate material 24 may comprise magnetic particles. In this embodiment the coating material 23' may be substantially transparent or translucent in order to allow the magnetic particles in the substrate material 24 to enhance or provide the desired visual effect.

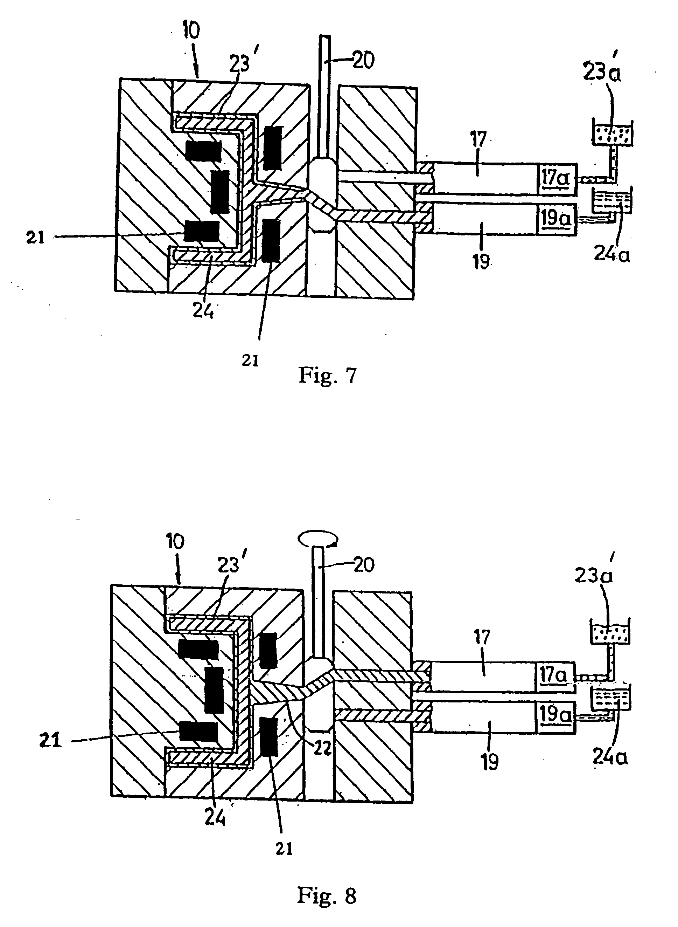

Fig. 7 shows a cross-section of the moulding machine after injection of the coating material 23' and substrate material 24. It can be seen that the substrate material 24 forms a thermoplastic substrate or core having a coating or skin formed by the coating material 23'.

The magnets 21 produce a magnetic field within the mould 10. The magnets 21 are arranged such that the fields manipulate the magnetic particles in the fluid coating material 23' and/or substrate material 24 before it has cured. The magnetic fields may be arranged to distribute and/or re-orientate the magnetic particles such that the moulding has a uniform appearance, or alternatively, to produce a moulding of which at least a portion is created having a 2-D, 3-D or textured image or appearance.

In Fig. 8, the valve 20 has been rotated again to shut off feed from the extruder 19 and to again permit injection of coating material 23' into the port 22 so that the machine 10 is ready for another injection cycle. The coating material 23' is injected into the mould 10 to coat the substrate material 24 in the region of the entrance port 22.

The heat applied to the thermosetting coating material 23' while it is temporarily in the extruder 17 is absorbed by the coating material 23' and, once in the mould 10, the heat will begin the curing process of the material 23' and substrate material 24. The curing process may begin as the coating material 23' is being spread over the mould 10 surfaces by the incoming substrate material 24 or may begin after the injection steps are complete. However, the magnetic fields are applied to manipulate the desired magnetic particles in the coating 23' and/or substrate 24 material before curing of the respective material(s) is completed.

Preferably, the curing of the thermosetting coating material 23' and substrate material 24 will also allow sufficient time to enable cross-linking to take place between the two materials 23',24 thereby ensuring an extremely good bond between them. Instead of a cross-linking occurring between the coating 23' and substrate 24 materials, a good bond alone may be achieved between them due to their intimate contact during injection.

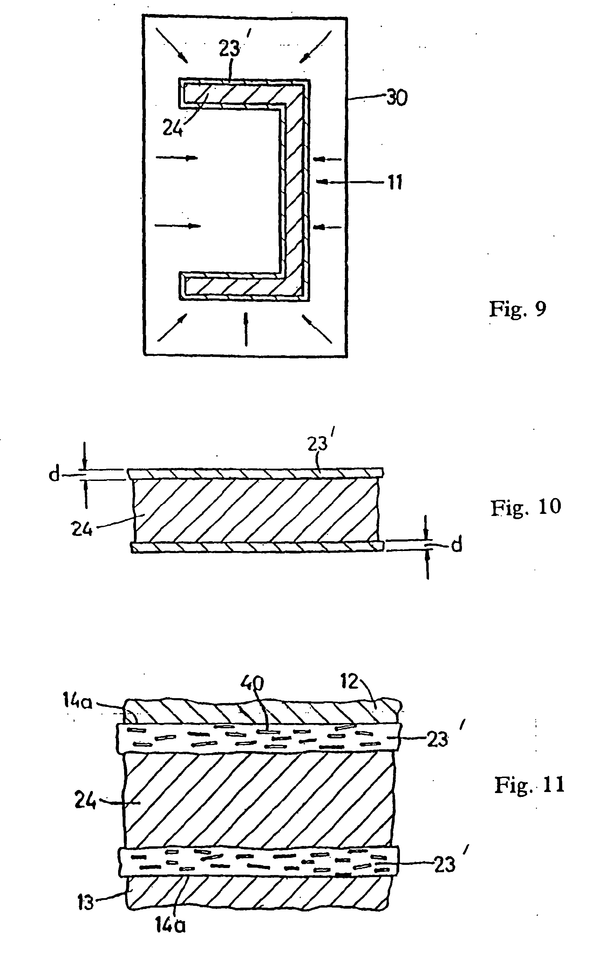

Referring to Fig. 9, the moulding 11 can be removed from the mould 10 and placed in an oven 30 to further heat and cure the coating material 23'. The oven is pre-heated to a temperature of, for example, around 250 °C. The moulding 11 is preferably subjected to heat at that temperature as indicated by arrows for a period which is sufficient to cure the coating material 23' but which is insufficient to have a significant softening effect on the bulk of the thermoplastics substrate material 24. Further magnetic fields may be applied to the moulding 11 at this stage if desired. It is believed that with careful control of timing and temperature, a good bond will be achieved between the coating material 23' and the substrate material 24.

The substrate material 24 is preferably selected so that it will have an affinity to the coating material 23' and materials such as ABS and nylon constitute suitable substrate materials 24 for such a coating material 23'.

Referring to Fig. 10, the depth d of the coating material 23' can be selected to be at least as thick as a paint coating which would normally be applied to, say, a car body component in a paint spraying or dipping facility. Also, the injection moulding tool 10 can provide a superfine surface finish for the coating material 23' which will compare well with that obtained by spray or dip painting.

Moreover, by producing a moulding 11 having a predetermined appearance in an injection moulding process, the finished moulding will be free from contamination by air-borne dust as well as being uniform and consistent. Also, the method of the preferred embodiment is cleaner and more environmentally friendly than producing a moulding having a finish using a conventional paint facility because the preferred process does not involve extracting contaminated air or effluent from a paint facility and emitting it into the atmosphere.

If desired, the substrate material 24 can be a thermosetting material instead of a thermoplastics material. The injection steps will be the same as that described above with reference to the drawings except that the mould 10 will be hotter, for example, at a temperature in a range 100 °C to 180 °C. As before, the heat applied to the coating material 23' will lead to the onset of curing and the hot mould 10 will speed up curing of the coating formed by coating material 23'. The heat from the mould 10 may also at least partially cure the substrate material 24. If desired the moulding 11 can be left to cure completely in the mould 10 or can be removed for post curing outside the mould, for example, in an oven 30. In the latter case heat applied to the thermosetting substrate material 24 preferably does not present any distortion problems to the thermosetting material.

The substrate material 24 may be injected as a foamed thermoplastic/thermosetting material.

Fig. 11 shows a portion of a cross-section through the dual injection moulding machine. In this embodiment elongated magnetic flakes 40 have been added to the coating material 23'. It has been found that as the coating material 23' spreads over the surfaces 14a of mould cavity 14, the spreading or flowing action causes the magnetic flakes 40 to orientate themselves so that they lie generally in a plane parallel with the flow. It can be seen that in this embodiment the magnetic fields have been arranged to orientate the magnetic flakes 40 in substantially the same direction and concentration throughout the coating layer 23' such that a moulding having a uniform appearance will be produced, regardless of the direction of the flow lines. In addition the magnetic fields may orientate the flakes 40 to lie so as not to project from the finished surfaces of the moulding 11.

In another embodiment one or more further materials may be injected into the cavity 14.

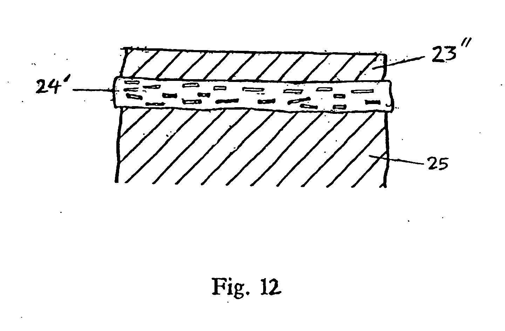

Fig. 12 shows a cross-section through a multiple injection moulding machine into which three materials have been injected. A first material 23" is injected into the cavity 14 followed by a second material 24'. Preferably, at least a third material 25 is then injected into the cavity 14. Preferably, the second material 24' comprises magnetic particles and may be injected into the cavity 14 before the first material 23" has completely cured. In this manner the region of the second material 24' in contact with the coating layer 23 " is prevented from "skinning" during the injection process. As such, the boundary between the adjacent layers 23",24' does not appear distorted and the magnetic particles are able to move over the inner surface of the first material 23 " during the injection process. Similarly, the third material 25 may be injected into the cavity 14 before the second material 24' has cured completely.

In this embodiment the first material is preferably a coating material 23" and the third material 25 may be a substrate layer. The coating material 23'' may be relatively hard or resilient and/or translucent or transparent. The coating material 23'' may serve to protect the second material 24' which contains the magnetic particles. Further, as the layer 24' containing the magnetic particles is provided between the coating 23" and substrate 25 materials it need not provide any structural function and therefore may have a relatively small volume. This relatively small volume is advantageous as it enables the quantity of magnetic particles required to achieve the desired visual effect.

Although various types of magnetic particles have been discussed above it is contemplated that the magnetic particles used in the present invention may comprise pigment flakes such as those disclosed in WO 03/000801 and US 20030143400.

## Claims

1. A method of forming a moulding by multiple injection moulding, said method comprising injecting a first material (23') into a mould (10), injecting at least a second material (24) behind said first material (23') so that said first material (23') covers a surface of said mould (10), wherein at least one of said materials (23',24) includes magnetic particles (40), applying one or more magnetic fields to at least a portion of at least one of said materials (23',24) so as to change the orientation and/or distribution of magnetic particles (40) in at least one of said materials (23',24), **characterized in that** said one or more magnetic fields change the orientation and/or distribution of at least some of said magnetic particles (40) in order to give a desired visual effect in at least a part of the moulding, the second material being injected into said mould (10).

2. A method as claimed in claim 1, wherein said second material (24) is injected into said mould (10) before said first material (23') has cured completely.

3. A method as claimed in claim 1 or 2, wherein at least a third material (25) is injected into said mould (10) after said second material (24) is injected.

4. A method as claimed in claim 3, wherein said third material (25) is injected into said mould (10) before said second material (24) has cured completely.

5. A method as claimed in any preceding claim, wherein said first (23') and/or second (24) and/or third (25) material comprises magnetic particles (40).

6. A method as claimed in any preceding claim, wherein said first (23') and/or second (24) and/or third (25) material is substantially translucent or transparent.

7. A method as claimed in any preceding claim, wherein said magnetic fields orientate and/or distribute at least some of said magnetic particles (40) uniformly.

8. A method as claimed in any preceding claim, wherein the strength of said magnetic fields is varied with time.

9. A method as claimed in claim 8, wherein the strength of said magnetic fields is varied by varying the power delivered to one or more electromagnets (21) with time.

10. A method as claimed in any preceding claim, wherein the strength and/or location of said magnetic fields is varied with time by moving one or more permanent magnets or electromagnets (21) relative to said mould (10).

11. A method as claimed in any preceding claim, wherein said magnetic fields are applied in said mould (10) before said at least one material (23',24,25) has cured completely.

12. A method as claimed in any preceding claim, wherein said magnetic particles (40) comprise nickel.

13. A method as claimed in claim 12, wherein said magnetic particles (40) comprise leafing grade nickel flakes.

14. A method as claimed in any preceding claim, wherein said magnetic particles (40) comprise a core and an outer coating.

15. A method as claimed in claim 14, wherein said core is a magnetic material.

16. A method as claimed in claim 14 or 15, wherein said coating is aluminium, magnesium fluoride and aluminium or magnesium fluoride and a metal.

17. A method as claimed in any of claims 14, 15 or 16, wherein said coating is coloured.

18. A method as claimed in any preceding claim, wherein said magnetic particles (40) are highly reflective.

19. A method as claimed in any of claims 1-17, wherein said magnetic particles (40) are highly absorptive of light.

20. A method as claimed in any preceding claim, wherein said magnetic particles (40) are substantially spherical.

21. A method as claimed in any of claims 1-19, wherein said magnetic particles (40) have an elongated, non-spherical shape.

22. A method as claimed in any preceding claim, wherein said magnetic particles (40) comprise 2-15% of the weight of at least one of said materials (23',24,25).

23. A method as claimed in claim 22, wherein said magnetic particles (40) comprise 3-10% of the weight of at least one of said materials (23',24,25).

24. A method as claimed in claim 23, wherein said magnetic particles (40) comprise about 5% of the weight of at least one of said materials (23',24,25).

25. A method as claimed in any of claims 1-21, wherein said magnetic particles (40) comprise 0.1-15% of the weight of at least one of said materials (23',24,25).

26. A method as claimed in claim 25, wherein said magnetic particles (40) comprise 0.5-10% of the weight of at least one of said materials (23',24,25).

27. A method as claimed in claim 25, wherein said magnetic particles (40) comprise 0.1-3% of the weight of at least one of said materials (23',24,25).

28. A method as claimed in claim 26, wherein said magnetic particles (40) comprise about 2% of the weight of at least one of said materials (23',24,25).

29. A method as claimed in claim 26, wherein said magnetic particles (40) comprise about 3% of the weight of at least one of said materials (23',24,25).

30. A method as claimed in any preceding claim, wherein said first and/or second and/or third materials (23',24,25) comprise different weight percentages of magnetic particles (40).

31. A method as claimed in any preceding claim, wherein at least one of said materials (23',24,25) is injected into said mould (10) whilst said mould is heated.

32. A method as claimed in claim 31, wherein said mould (10) is at a temperature in the range from 20 °C to 150 °C.

33. A method as claimed in any preceding claim, wherein said moulding is partially cured in said mould (10) and is heated until completely cured after removal from said mould.

34. A method as claimed in claim 33, wherein one or more further magnetic fields are applied to said moulding after it has been removed from said mould (10).

35. A method as claimed in any preceding claim, wherein said magnetic particles (40) are particles which are able to be manipulated by a magnetic field and wherein said particles do not generate magnetic fields.

## Patentansprüche

1. Verfahren zum Ausbilden eines Formteils mittels Mehrfachspritzguss, wobei das Verfahren umfasst: Einspritzen eines ersten Materials (23') in eine Gießform (10), Einspritzen wenigstens eines zweiten Materials (24) hinter das erste Material (23'), so dass das erste Material (23') eine Oberfläche der Gießform (10) bedeckt, wobei wenigstens eines der Materialien (23', 24) magnetische Partikel (40) enthält; Beaufschlagen wenigstens eines Teils von wenigstens einem der Materialien (23', 24) mit einem oder mehreren Magnetfeldern, um somit die Ausrichtung und/oder die Verteilung der magnetischen Partikel (40) in wenigstens einem der Materialien (23', 24) zu ändern; **dadurch gekennzeichnet, dass** das eine oder die mehreren Magnetfelder die Ausrichtung und/oder die Verteilung von wenigstens einigen der magnetischen Partikel (40) ändern, um einen gewünschten visuellen Effekt in wenigstens einem Teil des Formteils hervorzurufen, wobei das zweite Material in die Gießform (10) eingespritzt wird.

2. Verfahren nach Anspruch 1, wobei das zweite Material (24) in die Gießform (10) eingespritzt wird, bevor das erste Material (23') vollständig ausgehärtet ist.

3. Verfahren nach Anspruch 1 oder 2, wobei wenigstens ein drittes Material (25) in die Gießform (10) eingespritzt wird, nachdem das zweite Material (24) eingespritzt worden ist.

4. Verfahren nach Anspruch 3, wobei das dritte Material (25) in die Gießform (10) eingespritzt wird, bevor das zweite Material (24) vollständig ausgehärtet ist.

5. Verfahren nach irgendeinem der vorangehenden Ansprüche, wobei das erste (23') und/oder das zweite (24) und/oder das dritte (25) Material magnetische Partikel (40) umfassen.

6. Verfahren nach irgendeinem der vorangehenden Ansprüche, wobei das erste (23') und/oder das zweite (24) und/oder das dritte (25) Material im Wesentlichen durchscheinend oder durchsichtig sind.

7. Verfahren nach irgendeinem der vorangehenden Ansprüche, wobei die Magnetfelder wenigstens einige der magnetischen Partikel (40) gleichmaßig ausrichten und/oder verteilen.

8. Verfahren nach irgendeinem der vorangehenden Ansprüche, wobei die Stärke der Magnetfelder zeitlich variiert.

9. Verfahren nach Anspruch 8, wobei die Stärke der Magnetfelder variiert wird, indem die Leistung zeitlich variiert wird, die einem oder den mehreren Elektromagneten (21) zugeführt wird.

10. Verfahren nach irgendeinem der vorangehenden Ansprüche, wobei die Stärke und/oder der Ort der Magnetfelder zeitlich variiert werden, indem einer oder mehrere Permanentmagneten oder Elektromagneten (21) relativ zur Gießform (10) bewegt werden.

11. Verfahren nach irgendeinem der vorangehenden Ansprüche, wobei die Magnetfelder in der Gießform (10) angewendet werden, bevor das wenigstens eine Material (23', 24, 25) vollständig ausgehärtet ist.

12. Verfahren nach irgendeinem der vorangehenden Ansprüche, wobei die magnetischen Partikel (40) Nickel umfassen.

13. Verfahren nach Anspruch 12, wobei die magnetischen Partikel (40) Leafing-Grade-Nickelflocken umfassen.

14. Verfahren nach irgendeinem der vorangehenden Ansprüche, wobei die magnetischen Partikel (40) einen Kern und eine äußere Beschichtung umfassen.

15. Verfahren nach Anspruch 14, wobei der Kern ein magnetisches Material ist.

16. Verfahren nach Anspruch 14 oder 15, wobei die Beschichtung Aluminium, Magnesiumfluorid und Aluminium oder Magnesiumfluorid und ein Metall ist.

17. Verfahren nach irgendeinem der Ansprüche 14, 15 oder 16, wobei die Beschichtung farbig ist.

18. Verfahren nach irgendeinem der vorangehenden Ansprüche, wobei die magnetischen Partikel (40) stark reflektierend sind.

19. Verfahren nach irgendeinem der Ansprüche 1 bis 17, wobei die magnetischen Partikel (40) stark lichtabsorbierend sind.

20. Verfahren nach irgendeinem der vorangehenden Ansprüche, wobei die magnetischen Partikel (40) im Wesentlichen kugelförmig sind.

21. Verfahren nach irgendeinem der Ansprüche 1 bis 19, wobei die magnetischen Partikel (40) eine langgestreckte, nicht-kugelförmige Form aufweisen.

22. Verfahren nach irgendeinem der vorangehenden Ansprüche, wobei die magnetischen Partikel (40) 2-15 Gew.% von wenigstens einem der Materialien (23', 24, 25) umfassen.

23. Verfahren nach Anspruch 22, wobei die magnetischen Partikel (40) 3-10 Gew.-% von wenigstens einem der Materialien (23'. 24, 25) umfassen.

24. Verfahren nach Anspruch 23, wobei die magnetischen Partikel (40) etwa 5 Gew.% von wenigstens einem der Materialien (23', 24, 25) umfassen.

25. Verfahren nach irgendeinem der Ansprüche 1 bis 21, wobei die magnetischen Partikel (40) 0,1-15 Gew.-% von wenigstens einem der Materialien (23', 24, 25) umfassen.

26. Verfahren nach Anspruch 25, wobei die magnetischen Partikel (40) 0,5-10 Gew.-% von wenigstens einem der Materialien (23', 24, 25) umfassen.

27. Verfahren nach Anspruch 25, wobei die magnetischen Partikel (40) 0.1-3 Gew.-% von wenigstens einem der Materialien (23', 24, 25) umfassen.

28. Verfahren nach Anspruch 26, wobei die magnetischen Partikel (40) etwa 2 Gew.% von wenigstens einem der Materialien (23', 24, 25) umfassen.

29. Verfahren nach Anspruch 26, wobei die magnetischen Partikel (40) etwa 3 Gew.-% von wenigstens einem der Materialien (23', 24, 25) umfassen.

30. Verfahren nach irgendeinem der vorangehenden Ansprüche, wobei das erste und/oder das zweite und/oder das dritte Material (23' 24, 25) unterschiedliche Gewichtsprozentsätze an magnetischen Partikeln (40) umfassen.

31. Verfahren nach irgendeinem der vorangehenden Ansprüche, wobei wenigstens eines der Materialien (23', 24, 25) in die Gießform (10) eingespritzt wird, während die Gießform beheizt wird.

32. Verfahren nach Anspruch 31, wobei die Gießform (10) eine Temperatur im Bereich von 20 °C bis 150 °C aufweist.

33. Verfahren nach irgendeinem der vorangehenden Ansprüche, wobei das Formteil in der Gießform (10) teilweise aushärtet und nach dem Entnehmen aus der Gießform beheizt wird, bis es vollständig ausgehärtet ist.

34. Verfahren nach Anspruch 33, wobei das Formteil mit einem oder mehreren weiteren Magnetfeldern beaufschlagt wird, nachdem es aus der Gießform (10) entnommen worden ist.

35. Verfahren nach irgendeinem der vorangehenden Ansprüche, wobei die magnetischen Partikel (40) Partikel sind, die durch ein Magnetfeld manipulierbar sind, und wobei die Partikel keine Magnetfelder erzeugen.

## Revendications

1. Procédé pour former un article moulé par multiples moulages par injection, ledit procédé comprenant d'injecter un premier matériau (23') dans un moule (10), d'injecter au moins un second matériau (24) derrière ledit premier matériau (23') de sorte que ledit premier matériau (23') couvre une surface dudit moule (10), dans lequel l'un au moins desdits matériaux (23', 24) inclut des particules magnétiques (40), et d'appliquer un ou plusieurs champs magnétiques à une portion au moins de l'un au moins desdits matériaux (23', 24) de façon à changer l'orientation et/ou la distribution des particules magnétiques (40) dans l'un au moins desdits matériaux (23', 24), **caractérisé en ce que** lesdits un ou plusieurs champs magnétiques changent l'orientation et/ou la distribution de certaines au moins desdites particules magnétiques (40) afin de conférer un effet visuel désiré dans une partie au moins de l'article moulé, le second matériau étant injecté dans ledit moule (10).

2. Procédé selon la revendication 1, dans lequel ledit second matériau (24) est injecté dans ledit moule (10) avant que le premier matériau (23') soit complètement durci.

3. Procédé selon la revendication 1 ou 2, dans lequel au moins un troisième matériau (25) est injecté dans ledit moule (10) après avoir injecté ledit second matériau (24).

4. Procédé selon la revendication 3, dans lequel ledit troisième matériau (25) est injecté dans ledit moule (10) avant que ledit second matériau (24) soit complètement durci.

5. Procédé selon l'une quelconque des revendications précédentes, dans lequel ledit premier (23') et/ou ledit second (24) et/ou ledit troisième (25) matériau comprend des particules magnétiques (40).

6. Procédé selon l'une quelconque des revendications précédentes, dans lequel ledit premier (23') et/ou ledit second (24) et/ou ledit troisième (25) matériau est sensiblement translucide ou transparent.

7. Procédé selon l'une quelconque des revendications précédentes, dans lequel lesdits champs magnétiques orientent et/ou distribuent au moins certaines desdites particules (40) de façon uniforme.

8. Procédé selon l'une quelconque des revendications précédentes, dans lequel l'intensité desdits champs magnétiques est variée au cours du temps.

9. Procédé selon la revendication 8, dans lequel l'intensité desdits champs magnétiques est variée en faisant varier la puissance fournie à un ou plusieurs électroaimants (21) au cours du temps.

10. Procédé selon l'une quelconque des revendications précédentes, dans lequel l'intensité et/ou la localisation desdits champs magnétiques est variée au cours du temps en déplaçant un ou plusieurs aimants permanents ou électroaimants (21) par rapport audit moule (10).

11. Procédé selon l'une quelconque des revendications précédentes, dans lequel lesdits champs magnétiques sont appliqués dans ledit moule (10) avant que ledit au moins un matériau (23', 24, 25) soit complètement durci.

12. Procédé selon l'une quelconque des revendications précédentes, dans lequel lesdites particules magnétiques (40) comprennent du nickel.

13. Procédé selon la revendication 12, dans lequel lesdites particules magnétiques (40) comprennent des paillettes de nickel de nuance pelliculante.

14. Procédé selon l'une quelconque des revendications précédentes, dans lequel lesdites particules magnétiques (40) comprennent un noyau et un revêtement extérieur.

15. Procédé selon la revendication 14, dans lequel ledit noyau est un matériau magnétique.

16. Procédé selon la revendication 14 ou 15, dans lequel ledit revêtement est de l'aluminium, du fluorure de magnésium et de l'aluminium ou du fluorure de magnésium avec un métal.

17. Procédé selon l'une quelconque des revendications 14, 15 ou 16, dans lequel ledit revêtement est coloré.

18. Procédé selon l'une quelconque des revendications précédentes, dans lequel lesdites particules magnétiques (40) sont fortement réfléchissantes.

19. Procédé selon l'une quelconque des revendications 1 à 17, dans lequel lesdites particules magnétiques (40) sont fortement absorbantes vis-à-vis de la lumière.

20. Procédé selon l'une quelconque des revendications précédentes, dans lequel lesdites particules magnétiques (40) sont sensiblement sphériques.

21. Procédé selon l'une quelconque des revendications 1 à 19, dans lequel lesdites particules magnétiques (40) ont une forme allongée non sphérique.

22. Procédé selon l'une quelconque des revendications précédentes, dans lequel lesdites particules magnétiques (40) comprennent 2 à 15 % en poids de l'un au moins desdits matériaux (23', 24, 25).

23. Procédé selon la revendication 22, dans lequel lesdites particules magnétiques (40) comprennent 3 à 10 % en poids de l'un au moins desdits matériaux (23', 24, 25),

24. Procédé selon la revendication 23, dans lequel lesdites particules magnétiques (40) comprennent environ 5 % en poids de l'un au moins desdits matériaux (23', 24, 25).

25. Procédé selon l'une quelconque des revendications 1 à 21, dans lequel lesdites particules magnétiques (40) comprennent 0,1 à 15 % en poids de l'un au moins desdits matériaux (23', 24, 25).

26. Procédé selon la revendication 25, dans lequel lesdites particules magnétiques (40) comprennent 0,5 à 10 % en poids de l'un au moins desdits matériaux (23', 24, 25).

27. Procédé selon la revendication 25, dans lequel lesdites particules magnétiques (40) comprennent 0,1 à 3 % en poids de l'un au moins desdits matériaux (23', 24, 25).

28. Procédé selon la revendication 26, dans lequel lesdites particules magnétiques (40) comprennent environ 2 % en poids de l'un au moins desdits matériaux (23', 24, 25).

29. Procédé selon la revendication 26, dans lequel lesdites particules magnétiques (40) comprennent environ 3 % en poids de l'un au moins desdits matériaux (23', 24, 25).

30. Procédé selon l'une quelconque des revendications précédentes, dans lequel ledit premier et/ou ledit second et/ou ledit troisième matériau (23', 24, 25) comprennent différents pourcentages en poids de particules magnétiques (40).

31. Procédé selon l'une quelconque des revendications précédentes, dans lequel l'un au moins desdits matériaux (23', 24, 25) est injecté dans ledit moule (10) pendant que ledit moule est chauffé.

32. Procédé selon la revendication 31, dans lequel ledit moule (10) est à une température dans la plage de 20° C à 150° C.

33. Procédé selon l'une quelconque des revendications précédentes, dans lequel ledit article moulé est partiellement durci dans ledit moule (10) et est chauffé jusqu'à durcissement complet après enlèvement hors dudit moule.

34. Procédé selon la revendication 33, dans lequel un ou plusieurs autres champs magnétiques sont appliqués audit article moulé après que celui-ci ait été enlevé hors dudit moule (10).

35. Procédé selon l'une quelconque des revendications précédentes, dans lequel lesdites particules magnétiques (40) sont des particules qui sont capables d'être manipulées par un champ magnétique, et dans lequel lesdites particules ne génèrent pas de champ magnétique.
